(19) Europäisches Patentamt
European Patent Office
Office européen des brevets

(11) Publication number: **0 148 614**
**B1**

(12) **EUROPEAN PATENT SPECIFICATION**

(45) Date of publication of patent specification: **07.12.88**

(51) Int. Cl.$^4$: **C 08 F 10/00,** C 08 F 4/62

(21) Application number: **84308813.9**

(22) Date of filing: **17.12.84**

(54) **Process for preparing polyolefins.**

(30) Priority: **20.12.83 JP 238835/83**

(43) Date of publication of application:
**17.07.85 Bulletin 85/29**

(45) Publication of the grant of the patent:
**07.12.88 Bulletin 88/49**

(84) Designated Contracting States:
**DE FR GB**

(56) References cited:
**GB-A-2 066 273**
**GB-A-2 097 413**
**GB-A-2 098 227**

(73) Proprietor: **NIPPON OIL CO. LTD.**
**3-12, Nishi Shimbashi 1-chome**
**Minato-ku Tokyo (JP)**

(72) Inventor: **Matsuura, Kazuo**
**2-22-18 Higashi-Yukigaya Ota-ku**
**Tokyo (JP)**
Inventor: **Shiraishi, Takeichi**
**2-21 Hama-cho Kwasaki-ku Kawasaki-shi**
**Kanagawa-ken (JP)**
Inventor: **Kamiishi, Hirofumi**
**1053-11 Nakada-cho Totsuka-ku Yokohama-shi**
**Kanagawa-ken (JP)**
Inventor: **Okamoto, Mitsuo**
**422-6 Isogo-cho Isogo-ku Yokohama-shi**
**Kanagawa-ken (JP)**
Inventor: **Kuroda, Nobuyuki**
**185-2 Shirahatakamicho Kanagawa-ku**
**Yokohama-shi Kanagawa-ken (JP)**
Inventor: **Miyoshi, Mituji**
**2-1-108 Kugenuma-Higashi Fujisawa-shi**
**Kanagawa-ken (JP)**

(74) Representative: **Cropp, John Anthony David et al**
**MATHYS & SQUIRE 10 Fleet Street**
**London, EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 148 614 B1

**Description**

Background of the invention

The present invention relates to a new process for preparing polyolefins. More particularly, it is concerned with a process for preparing polyolefins not only capable of remarkably increasing the polymer yield per solid and that per transition metal, thereby dispensing with the step of removing catalyst remaining in the resultant polymer, at the same time enhancing the bulk density of the resultant polymer and diminishing the proportion of fine particles thereof, but also having good particle properties such as, for example, a large average particle diameter.

In this technical field, many methods have heretofore been known which employ a catalyst comprising an inorganic magnesium solid as carrier such as magnesium halide, magnesium oxide or magnesium hydroxide and a transition metal compound supported thereon such as a titanium compound or a vanadium compound. In these known methods, however, the resultant polymers generally have a low bulk density, a relatively small average particle diameter and a wide particle size distribution and hence a large proportion of fine particles. Therefore, improvement has strongly been demanded from the standpoint of productivity and polymer handling. Moreover, in molding these polymers there arise problems such as dusting and lowering of the molding efficiency, and therefore the foregoing increase of bulk density and decrease of the proportion of fine particles have been strongly demanded. Besides, further improvements are considered necessary in order to apply those polymers to processing machines directly in a powdered state without going through a pelletizing step. Demand for such a direct processing method has recently been increasing.

The present inventors have previously proposed a novel catalyst component free of the above-mentioned drawbacks in U.S. Patent No. 4,396,534. This catalyst can afford a polymer having a high bulk density and a large average particle diameter, but it has been considered necessary to make further improvements in order to apply the resultant powdered polymer to a processing machine directly without going through a pelletizing step.

Summary of the invention

It is the object of the present invention to provide a polymer free of the above-mentioned drawbacks and having a high bulk density, a large average particle diameter, a narrow particle size distribution, an extremely reduced proportion of fine particles and a good fluidity.

The present invention resides in a process for homopolymerizing olefin or copolymerizing olefins in the presence of a catalyst comprising a solid catalyst component and an organometallic compound, said solid catalyst component being a product obtained by intercontacting the following components (i) to (iv):

(i) a silicon oxide and/or an aluminum oxide,

(ii) a reaction product obtained by the reaction of a magnesium halide and a compound represented by the general formula $Me(OR)_nX_{z-n}$ wherein Me is an element of Groups I—IV in the Periodic Table, z is the valence of the element Me, n is $0<n\leqq z$, X is a halogen atom and each R is a hydrocarbon radical having 1 to 20 carbon atoms,

(iii) a halogenated silicon compound represented by the general formula $R_nSiX_{4-n}$ wherein R is a hydrogen atom or a hydrocarbon radical having 1 to 20 carbon atoms, X is a halogen atom and $0\leqq n<4$, and

(iv) a titanium compound and/or a vanadium compound.

By using the process of the present invention there can be obtained in high activity a polyolefin having a large average particle diameter, a narrow particle size distribution, a reduced proportion of fine particles and a good fluidity. Besides, the bulk density of the polyolefin is high. This high bulk density, coupled with good fluidity, is very advantageous to the polymerizing operation. Further, the polyolefin even in a powdered state, not to mention pellets, can be subjected to molding, and there are few molding troubles. Thus, it is possible to prepare polyolefins in an extremely advantageous manner.

The use of the catalyst of the present invention is further advantageous in that the molecular weight distribution of the resultant polyolefin can be changed in a wide range as desired by changing catalyst preparation conditions.

The catalyst of the present invention is preferably used especially for copolymerizing ethylene and one or more other α-olefins, thereby a crystalline ethylene copolymer having a very low density (0.87 to 0.92 $g/cm^3$) is easily obtainable.

Description of the preferred embodiments

The silicon oxide used in the present invention may be silica or a double oxide of silicon and at least one other metal of Groups I—VIII in the Periodic Table.

The aluminum oxide used in the present invention may be alumina or a double oxide of aluminum and at least one other metal of Groups I—VIII in the Periodic Table.

Typical examples of such double oxides of silicon or aluminum and at least one other metal of Groups I—VIII in the Periodic Table are various natural or synthetic double oxides such as $Al_2O_3 \cdot MgO$, $Al_2O_3 \cdot CaO$, $Al_2O_3 \cdot SiO_2$, $Al_2O_3 \cdot MgO \cdot CaO$, $Al_2O_3 \cdot MgO \cdot SiO_2$, $Al_2O_3 \cdot CuO$, $Al_2O_3 \cdot Fe_2O_3$, $Al_2O_3 \cdot NiO$ and $SiO_2 \cdot MgO$. It is to be understood that the above formulae are not molecular formulae, but represent only compositions and that the structure and component ratio of the double oxides used in the present invention are not

specially restricted thereby. It goes without saying that the silicon oxide and/or aluminum oxide used in the present invention may contain a small amount of water adsorbed therein and small amounts of impurities.

The magnesium halide used in the present invention is a substantially anhydrous one, examples of which are magnesium fluoride, magnesium chloride, magnesium bromide, magnesium iodide, and mixtures thereof, with magnesium chloride being particularly preferred. These magnesium halides may be treated before use with electron donors such as alcohols, esters, ketones, carboxylic acids, ethers, amines and phosphines.

As examples of the compound of the general formula $Me(OR)_nX_{z-n}$ used in the present invention wherein Me is an element of Groups I—IV in the Periodic Table, z is the valence of the element Me, $0<n\leqq z$, X is a halogen and each R is a hydrocarbon radical such as an alkyl, aryl or aralkyl group having 1 to 20, preferably 1 to 8, carbon atoms, mention may be made of such compounds as NaOR, $Mg(OR)_2$, Mg(OR)X, $Ca(OR)_2$, $Zn(OR)_2$, $B(OR)_3$, $B(OR)_2X$, $Al(OR)_3$, $Al(OR)_2X$, $Al(OR)X_2$, $Si(OR)_4$, $Si(OR)_3X$, $Si(OR)_2X_2$, $Si(OR)X_3$ and $Sn(OR)_4$. Concrete and preferred examples of these compounds are:

$Mg(OC_2H_5)_2$, $Mg(OC_2H_5)Cl$, $B(OC_2H_5)_3$, $Al(OCH_3)_3$, $Al(OC_2H_5)_3$, $Al(On—C_3H_7)_3$, $Al(Oi—C_3H_7)_3$, $Al(On—C_4H_9)_3$, $Al(Osec—C_4H_9)_3$, $Al(Ot—C_4H_9)_3$, $Al(OC_6H_5)_3$, $Al(OC_8H_{17})_3$, $Al(OCH_3)_2Cl$, $Al(OC_2H_5)_2Cl$, $Al(Oi—C_3H_7)_2Cl$, $Al(Oi—C_3H_7)Cl_2$, $Si(OC_2H_5)_4$, $Si(OC_2H_5)_3Cl$, $Si(OC_2H_5)_2Cl_2$ and $Si(OC_2H_5)Cl_3$.

The method of reacting the magnesium halide with the compound of the general formula $Me(OR)_nX_{z-n}$ is not specially limited. Both may be mixed and heat-reacted in an organic solvent such as an inert hydrocarbon, alcohol, ether, ketone or ester at a temperature of 20° to 400°C, preferably 50° to 300°C, for 5 minutes to 10 hours. Alternatively, the two may be reacted by a co-pulverization treatment. Co-pulverization treatment is particularly preferred.

The apparatus to be used for the co-pulverization is not specially limited. Usually, ball mill, vibration mill, rod mill or impact mill is used. Conditions such as pulverization temperature and time can be easily determined by those skilled in the art according to the pulverization method used. Generally, the pulverization temperature is in the range of 0° to 200°C, preferably 20° to 100°C, and the pulverization time is in the range of 0.5 to 50 hours, preferably 1 to 30 hours. Of course, the co-pulverizing operation should be done in an inert gas atmosphere, and moisture should be avoided.

The reaction ratio of magnesium halide and the compound of the general formula $Me(OR)_nX_{z-n}$ is 1:0.01~10, preferably 1:0.1~5, in terms of Mg:Me (mole ratio).

The halogenated silicon compound used in the present invention is represented by the general formula $R_nSiX_{4-n}$ wherein R is a hydrogen atom or a hydrocarbon radical such as an alkyl, aryl or aralkyl group having 1 to 20, preferably 1 to 8 carbon atoms, X is a halogen atom and $0\leqq n<4$. Examples are $SiCl_4$, $HSiCl_3$, $H_2SiCl_2$, $H_3SiCl$, $CH_3SiCl_3$, $(CH_3)_2SiCl_2$, $C_2H_5SiCl_3$, $n—C_4H_9SiCl_3$, $C_8H_{17}SiCl_3$, $C_{18}H_{37}SiCl_3$, $C_6H_5SiCl_3$ and $(C_6H_5)_2SiCl_2$, with $SiCl_4$ being particularly preferred.

As examples of the titanium compound and/or vanadium compound used in the present invention, mention may be made of halides, alkoxyhalides, alkoxides and halogenated oxides of titanium and/or vanadium.

Suitable examples of the titanium compound are tetravalent titanium compounds. As tetravalent titanium compounds, those represented by the general formula $Ti(OR)_nX_{4-n}$ are preferred wherein R is an alkyl, aryl or aralkyl group having 1 to 20 carbon atoms, X is a halogen atom and $0\leqq n\leqq 4$, such as, for example, titanium tetrachloride, titanium tetrabromide, titanium tetraiodide, monomethoxytrichlorotitanium, dimethoxydichlorotitanium, trimethoxymonochlorotitanium, tetramethoxytitanium, monoethoxytrichlorotitanium, tetraethoxydichlorotitanium, triethoxymonochlorotitanium, tetraethoxytitanium, monoisopropoxytrichlorotitanium, diisopropoxydichlorotitanium, triisopropoxymonochlorotitanium, tetraisopropoxytitanium, monobutoxytrichlorotitanium, dibutoxydichlorotitanium, monopentoxytrichlorotitanium, monophenoxytrichlorotitanium, diphenoxydichlorotitanium, triphenoxymonochlorotitanium and tetraphenoxytitanium. As trivalent titanium compounds are exemplified titanium trihalides obtained by reducing titanium tetrahalides such as titanium tetrachloride and titanium tetrabromide with hydrogen, aluminum, titanium or an organometallic compound of a metal of Groups I—III in the Periodic Table, as well as trivalent titanium compounds obtained by reducing tetravalent alkoxytitanium halides of the general formula $Ti(OR)_mX_{4-m}$ with an organometallic compound of a metal of Groups I—III in the Periodic Table in which formula R is an alkyl, aryl or aralkyl group having 1 to 20 carbon atoms, X is a halogen atom and $0<m<4$. Examples of the vanadium compound are tetravalent vanadium compounds such as vanadium tetrachloride, vanadium tetrabromide, vanadium tetraiodide and tetraethoxyvanadium, pentavalent vanadium compounds such as vanadium oxytrichloride, ethoxydichlorovanadyl, triethoxyvanadyl and tributoxyvanadyl, and trivalent vanadium compounds such as vanadium trichloride and vanadium triethoxide.

The titanium compound and the vanadium compound are often used together to make the present invention more effective. In this case, it is preferable that the V/Ti mole ratio be in the range of 2/1 to 0.01/1.

In obtaining the solid catalyst component used in the present invention, the components (i), (ii), (iii) and (iv) may be contacted and reacted in any of the following orders.

① Components (i) and (ii) are contacted, followed by contact with component (iii) and then with component (iv).

② Components (i) and (ii) are contacted, followed by contact with component (iv) and then with component (iii).

③ Components (i) and (ii) are contacted, followed by contact with components (iii) and (iv) simultaneously.

④ Components (i) and (iv) are contacted, followed by contact with component (ii) and then with component (iii).

The above reaction orders ① and ② are particularly preferred. The solid catalyst component obtained according to any of the above reaction orders may be further contacted several times with component (iii) and/or component (iv).

The method of intercontacting the components (i) to (iv) is not specially limited. These components may be mixed and heated in an organic solvent such as an inert hydrocarbon, alcohol, ether, ketone or ester at a temperature of 50° to 200°C for 5 minutes to 24 hours, followed by removal of the solvent, or may be co-pulverized at a temperature of 0° to 200°C for 0.5 to 50 hours, or may be treated by a suitable combination of these methods.

The amount of component (ii) used in the present invention is 0.01 to 5 g., preferably 0.1 to 2 g., per gram of component (i), and the amount of component (iii) is 0.01 to 75 g., preferably 0.1 to 50 g., per gram of component (i). As to the amount of component (iv), it is preferable to adjust it so that the titanium and/or vanadium content of the resultant solid component is in the range of 0.5 to 20 wt.%, with the range of 1 to 10 wt.% being especially desirable for obtaining a well-balanced activity per titanium and/or vanadium and that per solid.

If olefin polymerization is performed using a catalyst comprising the combination of the solid component thus obtained and an organometallic compound, there can be obtained a polyolefin having a large average particle diameter and a good fluidity as compared with the case where a solid component prepared according to another method is used.

As examples of the organometallic compound used in the present invention, mention may be made of organometallic compounds of metals of Groups I—IV in the Periodic Table which are known as one component of Ziegler type catalysts. Particularly, organoaluminum compounds and organozinc compounds are preferred. Concrete examples are organoaluminum compounds of the general formulae, $R_3Al$, $R_2AlX$, $RAlX_2$, $R_2AlOR$, $RAl(OR)X$ and $R_3Al_2X_3$, wherein the Rs, which may be the same or different, are each an alkyl or aryl group having 1 to 20 carbon atoms and X is a halogen atom, and organozinc compounds of the general formula $R_2Z_n$ wherein the Rs, which may be the same or different, are each an alkyl group having 1 to 20 carbon atoms, such as triethylaluminum, triisopropylaluminum, triisobutylaluminum, tri - sec - butylaluminum, tri - tert - butylaluminum, trihexylaluminum, trioctylaluminum, diethylaluminum chloride, diisopropylaluminum chloride, diethylaluminum ethoxide, ethylaluminum sesquichloride, diethylzinc, and mixtures thereof. The amount of the organometallic compound used is not specially limited, but usually it is in the range of 0.1 to 1,000 moles per mole of the titanium compound and/or vanadium compound.

The organometallic compound component used in the present invention may be in the form of a mixture or addition compound with an organic acid ester.

In the case of using a mixture of the organometallic compound with an organic acid ester, the organic acid ester is used in an amount of usually 0.1 to 1 moles, preferably 0.2 to 0.5 moles, per mole of the organometallic compound. In the case of using an addition compound of the organometallic compound with an organic acid ester, it is preferable that the organometallic compound:organic acid ester mole ratio be in the range of 2:1 to 1:2. The organic acid ester used is an ester of a saturated or unsaturated mono- or dibasic organic carboxylic acid having 1 to 24 carbon atoms with an alcohol having 1 to 30 carbon atoms. Examples are methyl formate, ethyl acetate, amyl acetate, phenyl acetate, octyl acetate, methyl methacrylate, ethyl stearate, methyl benzoate, ethyl benzoate, n-propyl benzoate, isopropyl benzoate, butyl benzoate, hexyl benzoate, cyclopentyl benzoate, cyclohexyl benzoate, phenyl benzoate, benzoic acid-4-tolyl, methyl salicylate, ethyl salicylate, methyl p - hydroxybenzoate, ethyl p - hydroxybenzoate, phenyl alicylate, cyclohexyl p - hydroxybenzoate, benzyl salicylate, ethyl α - resorcinate, methyl anisate, ethyl anisate, phenyl anisate, benzyl anisate, methyl p - ethoxybenzoate, methyl p - toluylate, ethyl p - toluylate, phenyl p - toluylate, ethyl o - toluylate, ethyl m - toluylate, methyl p - aminobenzoate, ethyl p - aminobenzoate, vinyl benzoate, allyl benzoate, benzyl benzoate, methyl naphthoate, and ethyl naphthoate.

Among the organic acid esters exemplified above, alkyl esters, especially methyl and ethyl esters, of benzoic acid, o- or p-toluic acid or anisic acid are particularly preferred.

The olefin polymerization using the catalyst of the present invention may be conducted as a slurry polymerization, solution polymerization or vapor phase polymerization. The catalyst of the invention is particularly suitable for vapor phase polymerization. The polymerization reaction is performed in the same way as in the conventional olefin polymerization reaction using a Ziegler type catalyst. More specifically, the reaction is conducted in a substantially oxygen- and water-free condition in the presence or absence of an inert hydrocarbon. Olefin polymerizing conditions involve temperatures in the range of 20° to 120°C, preferably 40° to 100°C, and pressures in the range from atmospheric pressure to 7MPa (70 kg/cm$^2$), preferably 0.2 to 6MPa (2 to 60 kg/cm$^2$). Adjustment of the molecular weight can be made to some extent by changing polymerization conditions such as the polymerization temperature and the catalyst mole ratio, but the addition of hydrogen into the polymerization system is more effective for this purpose. Of course,

using the catalyst of the present invention, two or more multi-stage polymerization reactions involving different hydrogen concentrations and different polymerization temperatures can be performed without any trouble.

The process of the present invention is applicable to the polymerization of all olefins that are polymerizable with a Ziegler type catalyst, with α-olefins having 2 to 12 carbon atoms being particularly preferred. For example, it is suitable for the homopolymerization of α-olefins such as ethylene, propylene, butene-1, hexene-1 and 4-methylpentene-1, as well as copolymerization of ethylene and propylene, ethylene and butene-1, ethylene and hexene-1, and propylene and butene-1.

Copolymerization with dienes for the modification of polyolefins is also preferred. Examples of diene compounds which may be used in such copolymerization are butadiene, 1,4-hexadiene, ethylidene norbornene and dicyclopentadiene.

The following examples are given to further illustrate the present invention.

Example 1

(a) Preparation of solid catalyst component

10 g. of a commercially available anhydrous magnesium chloride and 4.2 g. of aluminum triethoxide were placed in a stainless steel pot having an internal volume of 400 ml. and containing 25 stainless steel balls each about 12.7 mm (1/2 inch) in diameter, and ball-milled at room temperature for 16 hours in a nitrogen atmosphere to obtain a reaction product.

A three-necked flask equipped with a stirrer and a reflux condenser was purged with nitrogen, into which were charged 5 g. of the above reaction product and 5 g. of $SiO_2$ (#952, a product of Fuji-Davison) which had been calcined at 600°C. Then, 100 ml. of tetrahydrofuran was added and reaction was allowed to take place at 60°C for 2 hours, followed by drying at 120°C under reduced pressure to remove tetrahydrofuran. Then, 3 ml. of silicon tetrachloride was added and reaction was allowed to take place at 60°C for 2 hours. Thereafter, 1.6 ml. of titanium tetrachloride was added and reaction was allowed to proceed at 130°C for 2 hours to obtain a solid catalyst component containing 40 mg. of titanium per gram thereof.

(b) Vapor phase polymerization

A stainless steel autoclave was used as a vapor phase polymerization apparatus, and a loop was formed using a blower, a flow controller and a dry cyclone. The temperature of the autoclave was adjusted by passing warm water through the jacket around the autoclave.

Into the autoclave adjusted to 60°C were fed the above solid catalyst component and triethylaluminum at rates of 250 mg/hr and 50 mmol/hr, respectively. Also, propylene, ethylene and hydrogen, gases were fed while adjusting the propylene/ethylene ratio (mole ratio) in the vapor phase in the autoclave to 0.65 and the hydrogen pressure to 5% of the total pressure, and polymerization was performed while circulating the intra-system gases by the blower to afford a powdered ethylene copolymer having a bulk density of 0.47, a melt index (MI) of 1.2, a density of 0.8900, an average particle diameter of 990 μm, free of particles not larger than 177 μm, and having a good fluidity.

Catalytic activity was 150,000 g. copolymer/g. Ti and thus very high.

After a continuous run for 100 hours, the autoclave was opened and its interior was inspected. As a result, the interior was found to be clean with no polymer adhesion to the inner walls and stirrer, and there was no agglomeration of polymer.

Comparative Example 1

A solid catalyst component was prepared in the same way as in Example 1-(a) except that the silicon tetrachloride was not used.

Using the solid catalyst component just prepared above, copolymerization of ethylene and propylene was performed in the same manner as in Example 1-(b) to afford a powdered ethylene copolymer having a bulk density of 0.40, an MI of 1.0, a density of 0.9003, an average particle diameter of 700 μm, containing 1.5 wt.% of particles not larger than 177 μm, and having a slight stickiness. Catalytic activity was 110,000 g. copolymer/g. Ti.

After a continuous run for 100 hours, the autoclave was opened and its interior was inspected. As a result, there was a slight polymer adhesion to the stirrer, and three partially molten polymer agglomerates each about 1 cm in diameter were found in the autoclave.

Example 2

(a) Preparation of solid catalyst component

10 g. of a commercially available anhydrous magnesium chloride and 4.2 g. of aluminum triethoxide were placed in a stainless steel pot having an internal volume of 400 ml and containing 25 stainless steel balls each about 12.7 mm (1/2 inch) in diameter, and ball-milled at room temperature for 16 hours in a nitrogen atmosphere to obtain a reaction product.

A three-necked flask equipped with a stirrer and a reflux condenser was purged with nitrogen, into which were charged 5 g. of the above reaction product and 5 g. of $SiO_2$ (#952, a product of Fuji-Davison) which had been calcined at 600°C. Then, 100 ml. of tetrahydrofuran was added and reaction was allowed to

take place at 60°C for 2 hours, followed by drying at 120°C under reduced pressure to remove tetrahydrofuran. Then, 30 ml. of silicon tetrachloride was added and reaction was allowed to take place for 2 hours under reflux of silicon tetrachloride, followed by drying at room temperature under reduced pressure to remove silicon tetrachloride. Thereafter, 1.6 ml. of titanium tetrachloride was added and reaction was allowed to proceed at 130°C for 2 hours to give a solid catalyst component containing 40 mg. of titanium per gram thereof.

(b) Vapor phase polymerization

A stainless steel autoclave was used as a vapor phase polymerization apparatus, and a loop was formed using a blower, a flow controller and a dry cyclone. The temperature of the autoclave was adjusted by passing warm water through the jacket around the autoclave.

Into the autoclave adjusted to 60°C were fed the solid catalyst component just prepared above and triethylaluminum at rates of 250 mg/hr and 50 mmol/hr, respectively. Also, propylene, ethylene and hydrogen gases were fed while adjusting the propylene/ethylene ratio (mole ratio) in the vapor phase in the autoclave to 0.60 and the hydrogen pressure to 7% of the total pressure, and polymerization was performed while circulating the intra-system gases by the blower, to afford a powdered ethylene copolymer having a bulk density of 0.47, an MI of 1.4, a density of 0.8950, an average particle diameter of 950 μm, free of particles not larger than 177 μm, and having a good fluidity. Catalytic activity was 140,000 g. copolymer/g. Ti and thus very high.

After a continuous run for 100 hours, the autoclave was opened and its interior was inspected. As a result, the interior was found to be clean with no polymer adhesion to the inner wall and stirrer.

Example 3

(a) Preparation of solid catalyst component

10 g. of a commercially available anhydrous magnesium chloride and 4.2 g. of aluminum triethoxide were placed in a stainless steel pot having an internal volume of 400 ml. and containing 25 stainless steel balls each about 12.7 mm (1/2 inch) in diameter, and ball-milled at room temperature for 16 hours in a nitrogen atmosphere to obtain a reaction product.

A three-necked flask equipped with a stirrer and a reflux condenser was purged with nitrogen and then charged with 5 g. of the above reaction product and 5 g. of $SiO_2$ (#952, a product of Fuji-Davison) which had been calcined at 600°C. Then, 100 ml. of tetrahydrofuran was added and reaction was allowed to take place at 60°C for 2 hours, followed by drying at 120°C under reduced pressure to remove tetrahydrofuran. Then, 0.5 ml. of titanium tetrachloride was added and reaction was allowed to take place at 110°C for 2 hours and then 3 ml of silicon tetrachloride was added and reaction was allowed to take place at 60°C for 2 hours, to give a solid catalyst component containing 40 mg. of titanium per gram thereof.

(b) Vapor phase polymerization

A stainless steel autoclave was used as a vapor phase polymerization apparatus, and a loop was formed using a blower, a flow controller and a dry cyclone. The temperature of the autoclave was adjusted by passing warm water through the jacket around the autoclave.

Into the autoclave adjusted to 60°C were fed the above solid catalyst component and triethylaluminum at rates of 250 mg/hr and 50 mmol/hr, respectively. Also, propylene, ethylene and hydrogen gases were fed while adjusting the propylene/ethylene ratio (mole ratio) in the vapor phase in the autoclave to 0.50 and the hydrogen pressure to 10% of the total pressure, and polymerization was performed while circulating the intra-system gases by the blower, to afford a powdered ethylene copolymer having a bulk density of 0.49, an MI of 2.0, a density of 0.9100, an average particle diameter of 920 μm, free of particles not larger than 177 μm, and having a good fluidity. Catalytic activity was 120,000 g. copolymer/g. Ti and thus very high.

After a continuous run for 100 hours, the autoclave was opened and its interior was inspected. As a result, the interior was found to be clean with no polymer adhesion to the inner wall and stirrer.

Example 4

A vapor phase polymerization was carried out using the solid catalyst component prepared in Example 3. As the vapor phase polymerization apparatus there was used a stainless steel autoclave, and a loop was formed using a blower, a flow controller and a dry cyclone. The temperature of the autoclave was adjusted by passing warm water through the jacket around the autoclave.

Into the autoclave adjusted to 60°C were fed the solid catalyst component prepared in Example 3 and triethylaluminum at rates of 250 mg/hr and 50 mmol/hr, respectively. Further, butene-1, ethylene and hydrogen gases were fed while adjusting the butene-1/ethylene ratio (mole ratio) in the vapor phase in the autoclave to 0.55 and the hydrogen pressure to 10% of the total pressure, and polymerization was conducted while circulating the intra-system gases by the blower to afford a powdered ethylene copolymer having a bulk density of 0.48, an MI of 1.4, a density of 0.9000, an average particle diameter of 910 μm, free of particles not larger than 177 μm, and having a good fluidity. Catalytic activity was 112,000 g. copolymer/g. Ti and thus very high.

After a continuous run for 100 hours, the autoclave was opened and its interior was inspected. As a result, the interior was found to be clean with no polymer adhesion to the inner wall and stirrer.

Example 5

(a) Preparation of solid catalyst component

10 g. of a commercially available anhydrous magnesium chloride and 4.2 g. of aluminum triethoxide were placed in a stainless steel pot having an internal volume of 400 ml. and containing 25 stainless steel balls each about 12.7 mm (1/2 inch) in diameter, and ball-milled at room temperature for 16 hours in a nitrogen atmosphere to obtain a reaction product.

A three-necked flask equipped with a stirrer and a reflux condenser was purged with nitrogen and then charged with 2.5 g. of the above reaction product and 7.5 g. of $SiO_2$ (#952, a product of Fuji-Davison) which had been calcined at 600°C. Then, 100 ml. of tetrahydrofuran was added and reaction was allowed to take place at 60°C for 2 hours, followed by drying at 120°C under reduced pressure to remove tetrahydrofuran. Then, 3 ml of silicon tetrachloride was added and reaction was allowed to take place at 60°C for 2 hours, thereafter 1.6 ml. of titanium tetrachloride was added and reaction was allowed to proceed at 140°C for 2 hours to give a solid catalyst component containing 40 mg. of titanium per gram thereof.

(b) Vapor phase polymerization

A stainless steel autoclave was used as a vapor phase polymerization apparatus, and a loop was formed using a blower, a flow controller and a dry cyclone. The temperature of the autoclave was adjusted by passing warm water through the jacket around the autoclave.

Into the autoclave adjusted to 60°C were fed the above solid catalyst component and triethylaluminum at rates of 250 mg/hr and 50 mmol/hr, respectively. Further, butene-1, ethylene and hydrogen gases were fed while adjusting the butene-1/ethylene ratio (mole ratio) in the vapor phase in the autoclave to 0.48 and the hydrogen pressure to 15% of the total pressure, and polymerization was performed while circulating the intra-system gases by the blower, to afford a powdered ethylene copolymer having a bulk density of 0.48, an MI of 1.0, a density of 0.9100, an average particle diameter of 900 μm, free of particles not larger than 177 μm, and having a good fluidity. Catalytic activity was 120,000 g. copolymer/g. Ti and thus very high.

After a continuous run for 100 hours, the autoclave was opened and its interior was inspected. As a result, the interior was found to be clean with no polymer adhesion to the inner wall and stirrer.

Example 6

(a) Preparation of solid catalyst component

10 g. of a commercially available anhydrous magnesium chloride and 3.3 g. silicon tetraethoxide were placed in a stainless steel pot having an internal volume of 400 ml. and containing 25 stainless steel balls each about 12.7 mm (1/2 inch) in diameter, and balled-milled at room temperature for 16 hours in a nitrogen atmosphere to obtain a reaction product.

A three-necked flask equipped with a stirrer and a reflux condenser was purged with nitrogen and then charged with 5 g. of the above reaction product and 5 g. of $SiO_2$ (#952, a product of Fuji-Davison) which had been calcined at 600°C. Then, 100 ml. of tetrahydrofuran was added and reaction was allowed to take place at 60°C for 2 hours, followed by drying at 120°C under reduced pressure to remove tetrahydrofuran. Then, 2.0 ml. of titanium tetrachloride was added and reaction was allowed to take place at 130°C for 2 hours, thereafter 4 ml. of silicon tetrachloride was added and reaction was allowed to proceed at 60°C for 2 hours to give a solid catalyst component containing 45 mg. of titanium per gram thereof.

(b) Vapor phase polymerization

A stainless steel autoclave was used as a vapor phase polymerization apparatus, and a loop was formed using a blower, a flow controller and a dry cyclone. The temperature of the autoclave was adjusted by passing warm water through the jacket around the autoclave.

Into the autoclave adjusted to 60°C were fed the above solid catalyst component and triethylaluminum at rates of 250 mg/hr and 50 mmol/hr, respectively. Further, butene-1, ethylene and hydrogen gases were fed while adjusting the butene-1/ethylene ratio (mole ratio) in the vapor phase in the autoclave to 0.50 and the hydrogen pressure to 10% of the total pressure, and polymerization was conducted while circulating the intra-system gases by the blower to afford a powdered ethylene copolymer having a bulk density of 0.48, an MI of 1.1, a density of 0.9005, an average particle diameter of 940 μm, free of particles not larger than 177 μm, and having a good fluidity. Catalytic activity was 132,000 g. copolymer/g. Ti and thus very high.

After a continuous run for 100 hours, the autoclave was opened and its interior was inspected. As a result, the interior was found to be clean with no polymer adhesion to the inner wall and stirrer, and there was no polymer agglomeration.

Example 7

(a) Preparation of solid catalyst component

10 g. of a commercially available anhydrous magnesium chloride and 2.4 g. of magnesium diethoxide were placed in a stainless steel pot having an internal volume of 400 ml. and containing 25 stainless steel balls each about 12.7 mm (1/2 inch) in diameter, and ball-milled at room temperature for 16 hours in a nitrogen atmosphere to obtain a reaction product.

A three-necked flask equipped with a stirrer and a reflux condenser was purged with nitrogen and then charged with 5 g. of the above reaction product and 5 g. of $SiO_2$ (#952, a product of Fuji-Davison) which had been calcined at 600°C. Then, 100 ml. of tetrahydrofuran was added and reaction was allowed to take place at 60°C for 2 hours, followed by drying at 120°C under reduced pressure to remove tetrahydrofuran. Then, 0.5 ml. of titanium tetrachloride was added and reaction was allowed to take place at 110°C for 2 hours, thereafter 3 ml. of silicon tetrachloride was added and reaction was allowed to proceed at 60°C for 2 hours, followed by further addition of 1.1 ml. of titanium tetrachloride and reaction at 140°C for 2 hours to afford a solid catalyst component containing 40 mg. of titanium per gram thereof.

(b) Vapor phase polymerization

A stainless steel autoclave was used as a vapor phase polymerization apparatus, and a loop was formed using a blower, a flow controller and a dry cyclone. The temperature of the autoclave was adjusted by passing warm water through the jacket around the autoclave.

Into the autoclave adjusted to 60°C were fed the above solid catalyst component and triethylaluminum at rates of 250 mg/hr and 50 mmol/hr, respectively. Further, propylene, ethylene and hydrogen were fed while adjusting the propylene/ethylene ratio (mole ratio) in the vapor phase in the autoclave to 0.50 and the hydrogen pressure to 10% of the total pressure, and polymerization was conducted while circulating the intra-system gases by the blower to afford a powdered ethylene copolymer having a bulk density of 0.47, an MI of 1.8, a density of 0.9091, an average particle diameter of 900 μm, free of particles not larger than 177 μm, and having a good fluidity. Catalytic activity was 120,000 g. copolymer/g. Ti and thus very high.

After a continuous run for 100 hours, the autoclave was opened and its interior was inspected. As a result, the interior was found to be clean with no polymer adhesion to the inner wall and stirrer.

**Claims**

1. A process for preparing a polyolefin by polymerizing at least one olefin in the presence of a catalyst comprising a solid catalyst component and an organometallic compound, said solid catalyst component being a product obtained by intercontacting the following components (i)—(iv):

(i) a silicon oxide and/or an aluminum oxide,

(ii) a reaction product obtained by the reaction of a magnesium halide and a compound represented by the general formula $Me(OR)_nX_{z-n}$ wherein Me is an element of Groups I—IV in the Periodic Table, z is the valence of the element Me, $0<n\leqq z$, X is a halogen atom and each R is a hydrocarbon radical having 1 to 20 carbon atoms,

(iii) a halogenated silicon compound represented by the general formula $R_nSiX_{4-n}$ wherein R is a hydrogen atom or a hydrocarbon radical having 1 to 20 carbon atoms, X is a halogen atom and $0\leqq n<4$, and

(iv) a titanium compound and/or a vanadium compound.

2. The process of claim 1, wherein the silicon oxide is silica.

3. The process of claim 1 or claim 2 wherein the aluminium oxide is alumina.

4. The process of claim 1, claim 2 or claim 3 wherein the magnesium halide is an anhydrous magnesium chloride.

5. The process of any one of claims 1 to 4 wherein Me is Na, Mg, Ca, Zn, B, Al, Si, or Sn.

6. The process of any one of claims 1 to 5, wherein each R is an alkyl, aryl or aralkyl group having not more than 8 carbon atoms.

7. The process of any one of claims 1 to 6, wherein the titanium and/or vanadium compound is or are selected from halides, alkoxyhalides, alkoxides and halogenated oxides of titanium and vanadium.

8. The process of any one of claims 1 to 7, wherein the amount of component (ii) is in the range of 0.01 to 5 g. per gram of component (i), and/or the amount of component (iii) is in the range of 0.01 to 75 g. per gram of component (i), and/or the amount of component (iv) is in the range of 0.5 to 20 weight percent as the titanium and/or vanadium content of the solid catalyst component.

9. The process of any one of claims 1 to 8, wherein the reaction ratio of the magnesium halide to the compound of the general formula $Me(OR)_nX_{z-n}$ in component (ii) is 1:0.01~10 in terms of Mg:Me mole ratio.

10. The process of any one of claims 1 to 9, wherein the organometallic compound is an organoaluminum compound or an organozinc compound.

11. The process of any one of claims 1 to 10, wherein the olefin is an olefin having 2 to 12 carbon atoms.

12. The process of any one of claims 1 to 11, wherein the polymerisation reaction is carried out at a temperature in the range of 20° to 120°C and at a pressure in the range of atmospheric pressure to 7MPa (70 kg/cm$^2$).

**Patentansprüche**

1. Verfahren zur Herstellung eines Polyolefins durch Polymerisation mindestens eines Olefins in Gegenwart eines Katalysators, der eine feste Katalysatorkomponente und eine Organometallverbindung enthält, wobei die feste Katalysatorkomponente ein Produkt ist, welches erhalten wird, indem die nachstehenden Komponenten (i)—(iv) miteinander in Kontakt gebracht werden:

(i) ein Siliciumoxid und/oder ein Aluminiumoxid,

(ii) ein Reaktionsprodukt, erhalten durch Umsetzung eines Magnesiumhalogenids und einer Verbindung der allgemeinen Formel $Me(OR)_nX_{z-n}$, in der Me ein Element der Gruppen I—IV des Periodensystems ist, z die Wertigkeit des Elements Me ist, wobei $0<n\leqq z$ ist, X ein Halogenatom bedeutet und jedes R einen Kohlenwasserstoffrest mit 1 bis 20 Kohlenstoffatomen bedeutet,

(iii) eine Silicium-Halogen-Verbindung, dargestellt durch die allgemeine Formel $R_nSiX_{4-n}$, in der R ein Wasserstoffatom oder einen Kohlenwasserstoffrest mit 1 bis 20 Kohlenstoffatomen, X ein Halogenatom bedeuten und $0\leqq n<4$ ist und

(iv) eine Titanverbindung und/oder eine Vanadiumverbindung.

2. Verfahren nach Anspruch 1, bei dem das Siliciumoxid Siliciumdioxid ist.

3. Verfahren nach Anspruch 1 oder 2, bei dem das Aluminiumoxid Aluminiumtrioxid ist.

4. Verfahren nach Anspruch 1, Anspruch 2 oder Anspruch 3, bei dem das Magnesiumhalogenid ein wasserfreies Magnesiumchlorid ist.

5. Verfahren nach einem der Ansprüche 1 bis 4, bei dem Me für Na, Mg, Ca, Zn, B, Al, Si oder Sn steht.

6. Verfahren nach einem der Ansprüche 1 bis 5, bei dem jedes R eine Alkyl-, Aryl- oder Aralkylgruppe mit nicht mehr als 8 Kohlenstoffatomen bedeutet.

7. Verfahren nach einem der Ansprüche 1 bis 6, bei dem die Titan- und/oder Vanadiumverbindung unter Halogeniden, Alkoxyhalogeniden, Alkoxiden und halogenierten Oxiden des Titans und Vanadiums ausgewählt ist bzw. sind.

8. Verfahren nach einem der Ansprüche 1 bis 7, bei dem die Menge der Komponente (ii) im Bereich von 0,01 bis 5 g pro Gramm der Komponente (i) und/oder die Menge der Komponente (iii) im Bereich von 0,01 bis 75 g pro Gramm der Komponente (i) und/oder die Menge der Komponente (iv) im Bereich von 0,5 bis 20 Gew.-%, als Titan- und/oder Vanadiumgehalt der festen Katalysatorkomponente liegt.

9. Verfahren nach einem der Ansprüche 1 bis 8, bei dem das Umsetzungsverhältnis des Magnesiumhalogenids zu der Verbindung der allgemeinen Formel $Me(OR)_nX_{z-n}$ in Komponente (ii) 1:0,01 bis 10, ausgedrückt als Molverhältnis Mg:Me, beträgt.

10. Verfahren nach einem der Ansprüche 1 bis 9, bei dem die Organometallverbindung eine Organoaluminiumverbindung oder eine Organozinkverbindung ist.

11. Verfahren nach einem der Ansprüche 1 bis 10, bei dem das Olefin ein Olefin mit 2 bis 12 Kohlenstoffatomen ist.

12. Verfahren nach einem der Ansprüche 1 bis 11, bei dem die Polymerisationsreaktion bei einer Temperatur im Bereich von 20° bis 120°C und unter einem Druck im Bereich von Atmosphärendruck bis 7 MPa (70 $kg/cm^2$) durchgeführt wird.

**Revendications**

1. Un procédé pour la préparation d'une polyoléfine par polymérisation d'au monis une oléfine en présence d'un catalyseur comprenant un composant catalytique solide et un composé organométallique, ledit composant catalytique solide étant un produit obtenu par mise en contact des composants suivants (i)—(iv):

(i) un oxyde de silicium et/ou un oxyde d'aluminium,

(ii) un produit de réaction obtenu par la réaction entre un halogénure de magnésium et un composé représenté par la formule générale $Me(Or)_nX_{z-n}$ dans laquelle Me est un élément des groupes I—IV du Tableau Périodique des Eléments, z est la valence de l'élément Me, $0<n\leqslant z$, X est un atome d'halogène et chaque R est un radical hydrocarboné ayant de 1 à 20 atomes de carbone,

(iii) un composé de silicium halogéné représenté par la formule générale $R_nSiX_{4-n}$ dans laquelle R est un atome d'hydrogène ou un radical hydrocarboné de 1 à 20 atomes de carbone, X est un atome d'halogène de $0\leqslant n<4$, et

(iv) un composé du titane et/ou un composé du vanadium.

2. Le procédé selon la revendication 1 selon lequel l'oxyde de silicium est la silice.

3. Le procédé selon la revendication 1 ou 2 selon lequel l'oxyde d'aluminium est l'alumine.

4. Le procédé selon la revendication 1, 2 ou 3 selon lequel l'halogénure de magnésium est un chlorure de magnésium anhydre.

5. Le procédé selon l'une quelconque des revendications 1 à 4 selon lequel Me est Na, Mg, Ca, Zn, B, Al, Si ou Sn.

6. Le procédé selon l'une quelconque des revendications 1 à 5 selon lequel chaque R est un groupe alkyle, aryle ou aralkyle ayant pas plus de 8 atomes de carbone.

7. Le procédé selon l'une quelconque des revendications 1 à 6 selon lequel le composé du titane et/ou du vanadium est ou sont choisis parmi les halogénures, alcoxyhalogénures, alcoxydes et oxydes halogénés du titane et du vanadium.

8. Le procédé selon l'une quelconque des revendications 1 à 7, selon lequel la quantité de composant (ii) est dans l'intervalle de 0,01 à 5 g par gramme de composant (i), et/ou la quantité de composant (iii) est dans l'intervalle de 0,01 à 75 g per gramme de composant (i), et/ou la quantité du composant (iv) est dans l'intervalle de 0,5 à 20% en poids en tant que teneur en titane et/ou en vanadium du composant catalytique solide.

9. Le procédé selon l'une quelconque des revendications 1 à 8, selon lequel le rapport de réaction entre l'halogénure de magnésium et le composé de formule générale $Me(OR)_nX_{z-n}$ dans le composant (ii) est de 1:0,01~10 en termes de rapport molaire Mg:Me.

10. Le procédé selon l'une quelconque des revendications 1 à 9, selon lequel le composé organométallique est un composé organoaluminium ou un composé organozinc.

11. Le procédé selon l'une quelconque des revendications 1 à 10, selon lequel l'oléfine est une oléfine ayant de 2 à 12 atomes de carbone.

12. Le procédé selon l'une quelconque des revendications 1 à 11, selon lequel la réaction de polymérisation est conduite à une température dans l'intervalle de 20 à 120°C et à une pression dans l'intervalle allant de la pression atmosphérique à 7MPa (70 kg/cm$^2$).